**Europäisches Patentamt**

**European Patent Office**

**Office européen des brevets**

(11) Publication number: **0 074 851**
**B1**

# (12) EUROPEAN PATENT SPECIFICATION

(45) Date of publication of patent specification: **21.10.87**

(51) Int. Cl.⁴: **H 05 B 1/02, G 05 D 23/19**

(21) Application number: **82304848.3**

(22) Date of filing: **14.09.82**

(54) Multistage thermostat.

(30) Priority: **14.09.81 US 301679**

(43) Date of publication of application:
**23.03.83 Bulletin 83/12**

(45) Publication of the grant of the patent:
**21.10.87 Bulletin 87/43**

(84) Designated Contracting States:
**BE DE FR GB IT NL**

(56) References cited:
**EP-A-0 057 573**
**EP-A-0 057 574**
**DE-A-2 519 407**
**GB-A-1 005 938**

(73) Proprietor: **HONEYWELL INC.**
**Honeywell Plaza**
**Minneapolis Minnesota 55408 (US)**

(72) Inventor: **Benton, Ronald**
**5212 Zenith Avenue South**
**Minneapolis Minnesota 55410 (US)**

(74) Representative: **Frohwitter, Bernhard, Dipl.-Ing. et al**
**Bardehle-Pagenberg-Dost-Altenburg & Partner**
**Patent- und Rechtsanwälte Galileiplatz 1**
**Postfach 86 06 20**
**8000 München 80 (DE)**

**Description**

The present invention relates to thermostats, and in particular to multistage thermostats for controlling a primary heating means and secondary heating means.

Multistage heating plants have been in use for many years, and typically are made up of heating equipment that provides heat from two different sources. Examples are heat pumps with auxiliary electric resistance heat, heat pumps with auxiliary gas furnaces, and solar energy sources with auxiliary heat of either electric or fossil fuels. The reason for using heating plants that have primary and secondary fuel sources is to take advantage of a lower cost heating fuel with the use of the primary source of limited capacity, and then utilizing the secondary source of lower capital cost but which requires a more costly fuel for high load periods.

In recent years, to increase the cost efficiency of the use of multistage equipment, it has been common to install outside temperature sensing equipment to aid in the staging of the primary and secondary heating plants. As is well known, it is more efficient to provide heat by operating a heat pump than by the use of a secondary heating source such as electric heat. As this is the case, it is desirable to prevent the electric heat from becoming operable if the primary source, the heat pump, can handle the heating load by itself. Where a multistage system is operated at a constant indoor temperature, this creates no significant problem. If the indoor temperature is held constant, the natural variations in outdoor temperature cause the heat pump and its auxiliary heat to be staged in its most efficient manner. That is, the heat pump will supply heat until it is no longer able to maintain a stable temperature and then the auxiliary or electric heat will be brought into operation. A drawback, however, even with constant setpoint conventional multistage thermostats is the excessive offset or droop required to initiate operation of the auxiliary heating stages. To enhance comfort, outdoor sensors are frequently applied to reset br dedroop the thermostat control point. The effectiveness of outdoor reset depends on matching the reset means to the heating system capacity and the design weather conditions.

In order to save energy, it has become commonplace to provide a night setback function to many thermostats along with its associated day setup function. These functions provide for a lower nighttime temperature within the heated building, and a morning pickup or return to the normal daytime ambient temperature. Where night setback and morning pickup are provided, a heat pump may not be operated in its most efficient mode. For example, in the morning when the thermostat is returned to normal daytime ambient temperature control, the heat pump is turned on along with a number of stages of electric heat. This morning pickup therefore utilizes both the primary and secondary heating sources at the same time even though the heat pump alone might be capable of bringing the temperature of the building up to the set-point temperature if given sufficient time.

In order to prevent this type of a system from having the electric heat staged on at the time of morning pickup, many installations contain outside thermostats which lock the electric heat off if the outdoor ambient is above some predetermined temperature. This type of system is expensive and inefficient. It is expensive in that it requires an outside temperature sensing device and auxiliary control equipment. It is inefficient as many installers misadjust the equipment so that electric heat is brought on even though it would not be required to bring the building up to the normal daytime ambient. Moreover, the outdoor temperature at which the heat pump alone is capable of meeting the building heating demand varies depending upon solar, wind, and internal heat (accupants, lights, etc.) gains and losses. These effects can render even a properly adjusted outside thermostat inefficient.

In summary, it is common in the control of heat pumps with auxiliary heat, particularly electric heat, to install outside sensing equipment that reduces control point offset (droop) and overrides any setpoint changes either in setup in the morning or setback at night. The installation of this extra equipment, and the deficiencies in its adjustment, make the operation of heat pump equipment and auxiliary heat marginal in many types of installations. In some localities, the electric utilities supplying power have suggested that heat pump installations be operated without night setback and morning pickup just because of the conditions discussed above.

The object of the present invention is to provide an improved multistage thermostat that is particularly adapted to operate a heating plant having a primary heating source and a secondary heating source, such as a heat pump with auxiliary electric heat.

Accordingly, the present invention provides a multistage thermostat for controlling a heating plant having a primary heating means and secondary heating means, comprising temperature sensing means and adjustable setpoint means whose outputs are combined to form an error signal, further comprising integrator means and proportional constant means through which the error signal is passed in parallel to form a composite error signal which is used to control multistage cycler means of the thermostat, which multistage cycler means, in use of the thermostat, progressively stage the primary and secondary heating means, and further comprising exponential decay bias means responsive to a change in the setpoint exceeding a predetermined magnitude to generate an exponentially decaying bias signal which is combined into the error signal.

Efficient operation in setup is thereby accomplished by generating an "effective" setpoint that rises exponentially from the setback value to the setup value in a manner approximating the dynamic response of the building. During this transient, the integrator means gain is preferably reduced until the setup control point is established.

During isolated conditions like power up of the controller, efficient control is preferably accomplished by raising the setpoint in this exponential fashion from the existing control point to the desired setpoint if the deviation is large, or by operating the integrator means with a large gain to rapidly establish its appropriate value if the existing control point is near the desired setpoint.

A multistage thermostat in accordance with the invention will now be described, by way of example, with reference to the drawings, in which

Figures 1A and 1B together are a block diagram of the thermostat, and

Figure 2 is a graph of its operation.

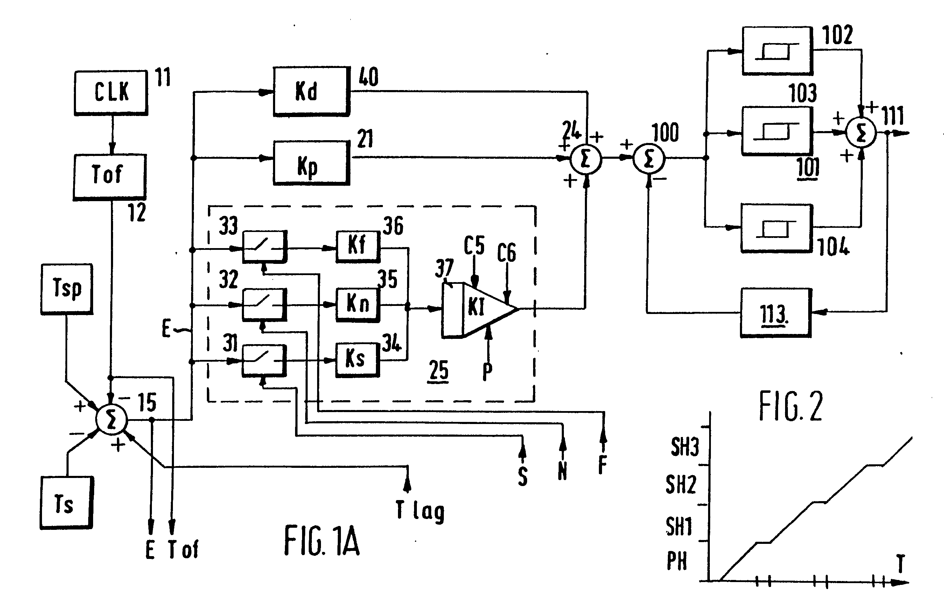

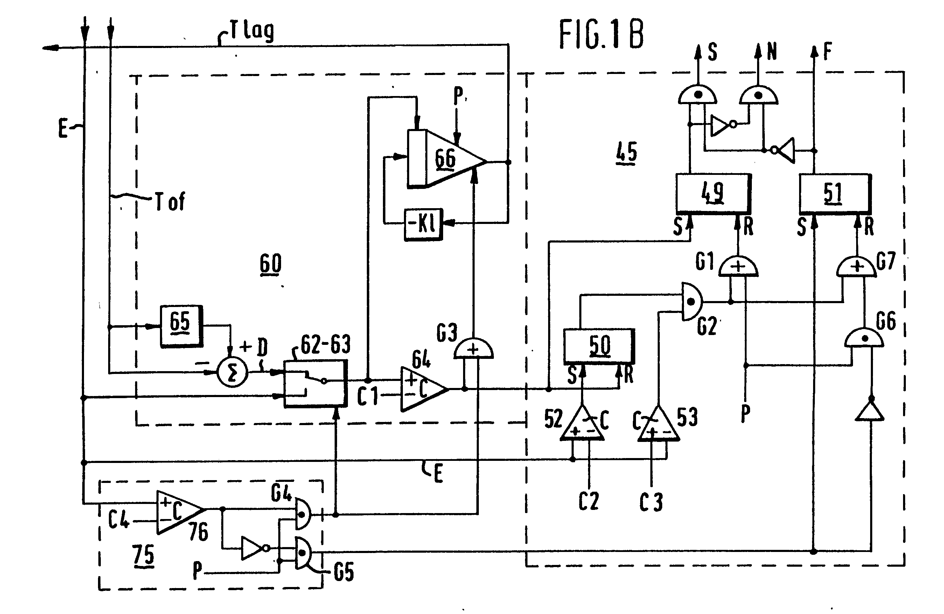

While the multistage thermostat of the present invention can be used with many types of heating plants having a primary heating means and a secondary heating means, the present disclosure will refer specifically to a heat pump as the primary heating means and stages of electrical heat as a secondary heating means. This type of heating plant readily benefits from a multistage thermostat of the type disclosed in the block diagram of Fig. 1A and 1B. The thermostat comprises a clock 11 which provides conventional functions, such as driving a set-up and set-back means 12 which can be programmed in any conventional manner. A temperature sensor $T_s$ senses the temperature of the space to be controlled, and a set-point device $T_{sp}$ is settable to the temperature desired. The set-up and set-back means 12 generate an off-set signal $T_{of}$, so that the set-point temperature is automatically set back (down) by a suitable amount at, say, 22:00 hrs and set up to the nominal value at, say, 06:00 hrs.

The off-set means 12, sensor $T_s$, and the set-point means $T_{sp}$ feed a summer 15 which forms a signal representing the difference between the actual and set-point temperatures. This signal is the temperature error signal E. This signal is fed to three signal processing paths or channels in parallel. The first signal processing channel includes a proportional constant means 21; the second processing channel 25 is an integrating means with a stored time integral value of the temperature error; and the third signal processing channel is a differentiating or rate determining means 40 producing an output consisting of the time rate of change of the current temperature error. The three means 21, 25 and 40 are all connected to a second summing means 24.

While three processing channels are present in the signal processing means, the system basically operates with the integrator means 25 in combination with the proportional constant means 21; the differentiating means 40 is optional, and operates conventionally.

The resulting signal from summer 24 is fed to multistage cycling means 101 which consists of a plurality of independent cycling stages 102, 103, ... 104, one for each heating stage (one primary stage PH and one or more secondary stages SH1, SH2, etc). Each cycling stage has a hysteresis characteristic, and the stages are arranged with their characteristics separated by small temperature intervals. Figure 2 is a graph showing the way in which the various stages of heat are brought into operation as the temperature error signal varies. For an error of less than 0.25°C, no heating stage is on. For an error in the range 0.25 to 2.5°C, the primary heating stage PH is on, cycling so that its percentage on time varies between 0 and 100% through that range. As the error increases, so successive secondary heating stages SH1, SH2, ... are brought into operation, each having a proportional range in which it cycles with an on time between 0 and 100% and the band for each stage being separated from the band for the previous stage by a small temperature separation of 0.25°C.

The cycling stages 102, 103, ... 104 may have their outputs combined as shown by a summer 111 to produce a control signal for the various heating stages, or may control their respective heating stages directly. A conventional anticipation circuit 113 provides feedback around the multistage cycling means, from the output of summer 111 to a summer 100 which is fed by summer 24 and feeds the multistage cycling means.

In the present system, the integrating channel 25 is more elaborate than in other systems with a single fixed gain device permanently coupling the error signal E to the integrator. Such other systems are disclosed, for example, in prior art but not pre-published European patent applications 57573 and 57574 (both now adandoned) of the same applicant. In the thermostat of Fig. 1A, however, the integrating channel 25 comprises three separate fixed gain devices 34 to 36 with gains Ks, Kn, and Kf, connected in series with three respective gates 31 to 33, which are controlled so that one and only one of the three fixed gain devices is selected to couple the error signal E to the integrator 37. In addition, a lag signal $T_{lag}$ is generated which is fed to the summer 15 as a fourth input thereto. The selection signals S (slow), N (normal), and F (fast rate) for the gates 31 to 33 and $T_{lag}$ are generated by the circuitry of Fig. 1B, which is driven by the error signal E and the offset signal $T_{of}$. The integrator 37 has its output limited to between two limiting constants C5 and C6, and can be reset to the constant C5 by a reset pulse P.

The circuitry of Fig. 1B consists of three sections. First, there is a logic section 45, which includes three flip-flops 49 to 51, two comparators 52 and 53 which determine the level of the error signal E relative to predetermined constants, and various other logic elements; this section generates the selection signals S, N, and F. Next, there is an exponentially decaying bias section 60, which generates the temperature lag signal $T_{lag}$; this signal creates an effective setpoint which rises on a decaying exponential. This section is driven by the error signal E and the offset signal $T_{of}$. It comprises a zero order hold circuit 65, a logic controlled switch 62—63, and a three-mode integrator 66, which can be reset to zero by a pulse P, be initialized by a pulse from a gate G3 to the value from switch 62—63, and operate as a normal time-controlled integrator in the absence of pulse P or a pulse from gate G3; there is a negative exponential constant feedback unit 70, −KI, around the integrator 66. Finally, there is a power-up section 75, which accepts a power-up pulse P from some power-up circuit (not shown) and includes a comparator 76 which, in accordance with the value of the error signal E relative to a constant C4, allows the pulse P to pass through one or other of gates G4 and G5, which feed the other two sections 45 and 60. The section 60 also includes a comparator 64, which determines the level of the output of switch 62—63 relative to a constant C1, and feeds gate G3 and the section 45.

As a preliminary to consideration of the normal operation of the system, the initial power-up operations will be discussed. As noted, these begin with the generation of the power-up pulse P. This is fed to the integrators 37 and 66 to reset them. Also, in circuit 75, the error signal E is compared with the constant C4 (which may typically be 0.5°C) by comparator 76; if E≥C4, gate G4 is enabled, whereas if not, gate G5 is enabled.

If G4 is enabled, this causes switch 62—63 to select signal E rather than signal D; after initialization, switch 62—63 selects signal D. The pulse from gate G4 passes through gate G3 to reset the integrator 66 to the error signal E from the switch 62—63. This generates the exponential signal Tlag which raises the effective set-point from the existing control point if the deviation (error signal E) is too large (above the constant C4). This prevents synchronization of the power demands of a community of heat pumps following a power failure. Also, the pulse P passes through gate G1 to reset flip-flop 49, and through gates G6 and G7 to reset flip-flop 51.

Looking at the circuitry 45 briefly, flip-flops 49 and 51 feed decoding logic circuitry which generates the signals S, N, and F; signal F is generated if flip-flop 51 is set, and signal S or signal N is generated depending on whether flip-flop 49 is set or reset if flip-flop 51 is reset. Thus resetting flip-flops 49 and 51 generates the N signal, for normal gain.

If gate G5 is enabled, the integrator 66 is simply reset by the pulse P. In addition, the pulse P passes through gate G1 to reset flip-flop 49. The pulse from gate G5 sets flip-flop 51, while gate G6 is disabled so that the pulse P does not pass through it to reach the reset input of flip-flop 51. This results in flip-flop 49 being reset and flip-flop 51 being set, so generating signal F, for fast gain. This selects a larger than normal gain in the processing channel 25, to rapidly establish the appropriate integrator value.

In the normal operating mode, the system determines whether a change has occurred between the existing setpoint and a prior setpoint. This change then is used to determine whether the thermostat operates in a conventional (normal) mode, or whether a setback or setup function has occurred. The system then determines the correct composite error signal E, and causes the operation of the appropriate level of the cycler means 101. The system also then determines the status of the flip-flop 49, 50, and 51 and controls the switches 31, 32, and 33 to provide the integrator 37 of the signal processing channel 25 with the appropriate constant.

In operation, the easiest mode of operation to consider is constant setpoint operation where the temperature offset Tof is zero. Consider the condition where the change in Tof (signal D, the result of the summing of Tof and the output of the zero order hold means 65) is zero. The exponential decay bias means 60 is not activated so Tlag is zero, and the integrator gain control logic means 45 selects the normal gain constant 35 through switch 32 by way of output N. A composite error signal from summer 24 will thus be generated to command the cycling means 101 to lock on and/or cycle the appropriate heating stages to maintain the control point at the desired setpoint Tsp. The presence of the integrator signal processing channel 25 accomplishes this without offset (droop).

To initiate a 6°C setback with a Tsp of 21°C, the setup and setback means 12 would change the programmed temperature offset Tof to 6°C thereby creating an "effective" setpoint of 15°C. The exponentially decaying bias means 60 detects the change in Tof as a signal D of −6°C. With a constant C1 of zero, for example, this change in Tof would not affect the bias means 60 so that Tlag would remain zero and the normal integration gain constant 35 would remain in the control circuit. The thermostat means 10, therefore, would perform a snap setback of 6°C.

To initiate a 6°C setup following the above setback, the setup and setback means 12 would change the programmed temperature offset Tof from 6°C to 0°C. The exponentially decaying bias means 60 now detects the change in Tof as a signal D of +6°C. Since D is now greater than C1, Tlag is set equal to D and begins to exponentially decay. The "effective" setpoint thus remains at 15°C and begins to rise exponentially at 21°C. The output of comparator 64 sets flip-flop 49 and resets flip-flop 50, which selects a gain constant Ks by closing switch 31 with S. Integrator gain constant Ks is normally lower than the normal gain constant Kn to reduce overshoot during the setpoint transient. The resulting control action brings on only the heating stages required to track the exponentially rising "effective" setpoint. Since the exponential constant −KI is chosen to approximate the dynamic response of the building under control (typically a 1 hr time constant), the rate of rise is slow enough to allow only the heat pump to turn on during mild outdoor conditions. At colder outdoor conditions, the control point cannot track the setpoint, and therefore additional heating stages are turned on as required. By extending the setup recovery to approximately 2 hr (with a 1 hr time constant), the power demand of the heating system is more diversified than a snap setpoint change. By raising the setpoint in a fashion similar to the natural response of the house rather than a ramp, not only is more efficient operation obtained, but plant cycling occurs towards the end of the recovery period rather than at the beginning. Such operation is more readily accepted by a homeowner than one that turns off the heating plant shortly after recovery has begun.

Up to this point in the description of a setup transient, the integrator signal processing channel 25 has been operating at a low gain Ks to minimize control point overshoot. During the transient as the current temperature error signal E grows larger than constant C2 in comparator 52, flip-flop 50 is set to indicate that a transient is well underway. Now, when steady control is reestablished, namely when the current temperature error signal E falls below constant C3 of comparator 53, the integrator gain control logic means 45 is reset and the normal gain constant Kn.

This normal operation may be summarized as the following steps.

1. Compute D, as the change of Tof, at 65.

2. Is D≥C1 at 64? If it is, then set flip-flop 49, reset flip-flop 50, initialize Tlag to D, and start the exponential decay.

3. Compute the current error E at summer 15, compute the composite error command to the cycler 101 at summer 24, and generate the cycler output (on/off) control signals for each stage 102, 103, . . . 104.

4. Is E≥C2 at 52? If it is, set flip-flop 50.

5. Is flip-flop 50 set and is E≤C3 at 53? If both are so, reset flip-flops 49 and 51.

6. Integrate E and limit the output at the appropriate rate in channel 25.
This sequence is of course carried out repeatedly at suitable intervals.

It will be realized that the functions described here as being performed by means of specific digital and analog circuitry may be performed or simulated by means of a suitable programmed microprocessor.

## Claims

1. A multistage thermostat for controlling a heating plant having a primary heating means and secondary heating means, comprising temperature sensing means (Ts) and adjustable setpoint means (Tsp) whose outputs are combined (at 15) to form an error signal (E), further comprising integrator means (25) and proportional constant means (21) through which the error signal (E) is passed in parallel to form a composite error signal (at 24) which is used to control multistage cycler means (101) of the thermostat, which multistage cycler means, in use of the thermostat, progressively stage the primary and secondary heating means, and further comprising exponential decay bias means (60) responsive to a change in the setpoint exceeding a predetermined magnitude to generate an exponentially decaying bias signal (Tlag) which is combined (at 15) into the error signal.

2. A multistage thermostat according to claim 1, further comprising power-up reset means (75) which energize the exponential decay bias means (60) on powering up of the thermostat.

3. A multistage thermostat according to claim 1, characterized in that the integrator means (25) includes two gain constants, the first (Kn) being a normal gain constant which is normally selected, and the second (Ks) being a reduced gain constant which is selected on a set-up temperature increase.

4. A multistage thermostat according to claims 2 and 3, characterized in that the integrator means (25) includes a third gain constant (Kf) of increased value which is selected by the power-up reset means (75) on powering-up of the thermostat if the error signal (E) is less than a constant (C4).

5. A multistage thermostat according to any previous claim, characterized in that the exponential decay bias means (60) comprises an integrator (66) having negative exponential constant feedback means (−Kl).

6. A multistage thermostat according to any previous claim, characterized by a clock (11) and time set means (12) which generate offset temperature signals (Tof) at presettable times.

7. A multistage thermostat according to any previous claim, characterized in that the multistage cycler means comprises a respective cycler stage (102, 103, . . . 104) for each stage of heating means, the cycler stages each having a hysteresis and the cycler stages of the secondary heating means, if the secondary heating means comprise a plurality of stages, being separated by temperature differentials.

8. A multistage thermostat according to any previous claim, characterized by anticipation means (113) which give negative feedback around the multistage cycler means (101).

9. A multistage thermostat according to any previous claim, characterized by differentiating means (40) connected in parallel with the integrator means (25) and proportional constant means (21) also connected in parallel with the integrator means (25) and the differentiating means (40).

## Patentansprüche

1. Viel- bzw. mehrstufiger Thermostat zur Kontrolle bzw. Steuerung einer Heizungsanlage mit einer ersten Heizungseinrichtung und einer zweiten Heizungseinrichtung, gekennzeichnet durch Temperaturfühleinrichtungen (Ts) und verstellbare Sollwert-Einrichtungen (Tsp), deren Ausgänge (bei 15) kombiniert sind, um ein Fehlersignal (E) zu bilden, durch Integratoreinrichtungen (25) und proportionale Konstanteneinrichtungen (21), durch die das Fehlersignal (E) parallel geführt wird, um (bei 24) ein zusammengesetztes Fehlersignal zu bilden, das zur Kontrolle bzw. Steuerung von viel-/mehrstufigen Zykluseinrichtungen (101) des Thermostats benutzt wird, wobei die mehrstufigen Zykluseinrichtungen, bei Gebrauch des Thermostats, die erste und die zweite Heizungseinrichtung progressiv bzw. zunehmend abstufen, und durch exponentiell abfallende Vorspannungseinrichtungen (60), verantwortlich für eine Sollwert-Veränderung, die über eine vorher bestimmte Größe hinausgeht, um ein exponentiell abfallendes Vorspannungssignal (Tlag) zu erzeugen, das (bei 15) in das Fehlersignal hinein kombiniert ist.

2. Viel- bzw. mehrstufiger Thermostat nach Anspruch 1, gekennzeichnet durch eine Einschalt-Zurückstelleinrichtung (75), die die exponentiell abfallende Vorspannungseinrichtung (60) bei Einschaltung des Thermostaten erregt.

3. Viel- bzw. mehrstufiger Thermostat nach Anspruch 1, dadurch gekennzeichnet, daß die Integratoreinrichtungen (25) zwei Verstärkungskonstanten umfassen, wobei die erste (Kn) eine normal selektierte normale Verstärkungskonstante ist, und die zweite (Ks) eine reduzierte Verstärkungskonstante ist, die auf eine aufgesetzte Temperaturerhöhung selektiert ist.

4. Viel- bzw. mehrstufiger Thermostat nach Anspruch 2 und 3, dadurch gekennzeichnet, daß die Integratoreinrichtungen (25) eine dritte Verstärkungskonstante (Kf) von erhöhtem Wert umfassen, die durch die Einschalt-Rückstelleinrichtung (75) bei Einschalten des Thermostaten selektiert ist, wenn das Fehlersignal (E) kleiner ist, als eine Konstante (C4).

5. Viel- bzw. mehrstufiger Thermostat nach einem der vorstehenden Ansprüche, dadurch gekennzeichnet, daß die exponentiell abfallende Vorspannungseinrichtung (60) einen Integrator (66) umfaßt, der eine negativ exponentielle konstante Feedback-Einrichtung (−Kl) aufweist.

6. Viel- bzw. mehrstufiger Thermostat nach einem der vorstehenden Ansprüche, dadurch gekennzeichnet, daß eine Uhr (11) und eine Zeiteinstellungseinrichtung (12) vorgesehen sind, die zu vorher festsetzbaren Zeiten Temperaturverschiebungssignale (Tof) erzeugen.

7. Viel- bzw. mehrstufiger Thermostat nach einem der vorstehenden Ansprüche, dadurch gekennzeichnet, daß die viel- bzw. mehrstufigen Zykluseinrichtungen eine entsprechende Zyklusstufe (102, 103, . . . 104) für jede Stufe der Heizeinrichtung aufweist, wobei die Zyklusstufen jeweils eine Hysterese aufweisen, und daß Zyklusstufen der zweiten Heizeinrichtung durch Temperaturdifferentiale separiert sind, wenn die zweiten Heizeinrichtungen eine Vielzahl von Stufen umfassen.

8. Viel- bzw. mehrstufiger Thermostat nach einem der vorstehenden Ansprüche, gekennzeichnet, durch Antizipationseinrichtungen (113), die um die viel- bzw. mehrstufigen Zykluseinrichtungen (101) herum einen negativen Feedback geben.

9. Viel- bzw. mehrstufiger Thermostat nach einem der vorstehenden Ansprüche, gekennzeichnet durch eine differenzierende Einrichtung (40), die mit den Integratoreinrichtungen (25) und den proportionalen Konstanteneinrichtungen (21) parallel verbunden sind, und auch parallel verbunden sind mit den Integratoreinrichtungen (25) und der differenzierenden Einrichtung (40).

**Revendications**

1. Thermostat à étages multiples pour commander une centrale de chauffe comprenant un moyen de chauffage primaire et un moyen de chauffage secondaire, comprenant des moyens de détection de température (Ts) et des moyens réglables de point de fonctionnement (Tsp) dont les sorties sont combinées (en 15) pour fournir un signal d'erreur (E), comprenant en outre un moyen intégrateur (25) et un moyen de constante proportionnelle (21) à travers lesquels le signal d'erreur (E) est transmis en parallèle pour former un signal d'erreur composite (en 24) qui est utilisé pour commander un moyen générateur de cycle à plusieurs étages (101) du thermostat, ce moyen générateur de cycle à plusieurs étages, lors de l'utilisation du thermostat, mettant en oeuvre progressivement les premier et second moyens de chauffage, et comprenant en outre des moyens de polarisation à décroissance exponentielle (60) agissant en réponse au fait que le point de réglage dépasse une amplitude prédéterminée pour produire un signal de polarisation à décroissance exponentielle (TLag) qui est combiné (en 15) au signal d'erreur.

2. Thermostat à étages multiples selon la revendication 1, comprenant en outre un moyen de remise à zéro d'alimentation (75) qui alimente le moyen de polarisation à décroissance exponentielle (60) lors de l'alimentation du thermostat.

3. Thermostat à étages multiples selon la revendication 1, caractérisé en ce que le moyen intégrateur (25) comprend deux constantes de gain, la première (Kn) étant une constante de gain normale qui est normalement choisie et la seconde (Ks) étant une constante de gain réduite qui est choisie lors d'une augmentation de la température de réglage.

4. Thermostat à étages multiples selon les revendications 2 et 3, caractérisé en ce que le moyen intégrateur (25) comprend une troisième constante de gain (Ks) de valeur augmentée qui est choisie par le moyen de remise à zéro de l'alimentation (75) lors de la mise sous tension du thermostat si le signal d'erreur (E) est inférieur à une constante (C4).

5. Thermostat à étages multiples selon une quelconque des revendications précédentes, caractérisé en ce que le moyen de polarisation à décroissance exponentielle (60) comprend un intégrateur (66) muni d'un moyen de réaction à constante exponentielle négative (−Kl).

6. Thermostat à étages multiples selon l'une quelconque des revendications précédentes, caractérisé par une horloge (11) et un moyen de réglage de temps (12) qui produisent des signaux de température de décalage (Tof) à des instants préréglables.

7. Thermostat à étages multiples selon l'une quelconque des revendications précédentes, caractérisé en ce que le moyen générateur de cycle à étages multiples comprend un étage générateur de cycle en respectif (102, 103, ... 104) pour chaque étage du moyen de chauffage, des étages générateurs de cycle ayant chacun une hystérésis, et les étage générateurs de cycle du moyen de chauffage secondaire, si le moyen de chauffage secondaire comprend plusieurs étages, étant séparés par des différentiels de température.

8. Thermostat à étages multiples selon l'une quelconque des revendications précédentes, caractérisé par des moyens d'anticipation (113) qui produisent une réaction négative autour des moyens générateurs de cycle à étages multiples (101).

9. Thermostat à étages multiples selon l'une quelconque des revendications précédentes, caractérisé par des moyens de différentiation (40) connectés en parallèle avec les moyens intégrateurs (25) et des moyens de constante proportionnelle (21) également connectés en parallèle avec les moyens intégrateurs (25) et le moyen de différentiation (40).

FIG.2

FIG.1A

FIG.1B